# EUROPÄISCHE PATENTSCHRIFT

(11) **EP 2 899 845 B1**
(45) Veröffentlichungstag und Bekanntmachung des Hinweises auf die Patenterteilung: **05.09.2018**
(21) Anmeldenummer: 15150249.9
(22) Anmeldetag: 07.01.2015
(51) Int. Cl.: H02J 7/02, H02J 7/00, H04R 25/00, H01Q 1/27, H02J 50/10, H02J 50/40

(54) **LADEGERÄT MIT DUALEM ANTENNENSYSTEM UND VERFAHREN ZUM DRAHTLOSEN LADEN EINES ODER MEHRERER HÖRGERÄTE**
CHARGING DEVICE WITH DUAL ANTENNA SYSTEM AND METHOD FOR WIRELESS CHARGING OF ONE OR MORE HEARING AIDS
APPAREIL DE CHARGE AVEC SYSTÈME D'ANTENNE DOUBLE ET PROCÉDÉ DESTINÉ À CHARGER UN OU PLUSIEURS APPAREILS AUDITIFS

(30) Priorität: 22.01.2014 DE 102014201118
(43) Veröffentlichungstag der Anmeldung: 29.07.2015
(73) Patentinhaber: Siemens Aktiengesellschaft, 80333 München (DE)
(72) Erfinder: Martius, Sebastian, 91301 Forchheim (DE); Sewiolo, Benjamin, 90587 Obermichelbach OT Rothenberg (DE)
(74) Vertreter: FDST Patentanwälte

(56) Entgegenhaltungen:
- DE-A1- 10 218 124
- DE-A1-102011 076 918

## Beschreibung

Die vorliegende Erfindung betrifft ein Ladegerät zum drahtlosen Laden mindestens eines Hörgeräts mit einem zylindrischen Behälter, einer Antenne zum Erzeugen eines magnetischen Wechselfelds in dem Behälter bei elektrischer Anregung und einer Ladeschaltung, mit der die Antenne elektrisch anregbar ist. Darüber hinaus betrifft die vorliegende Erfindung ein Verfahren zum drahtlosen Laden mindestens eines Hörgeräts.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

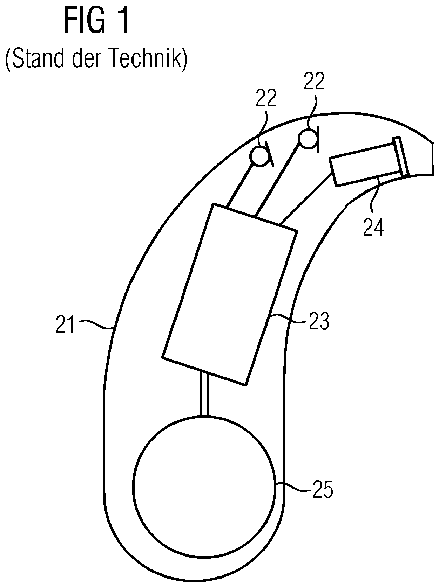

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 21 zum Tragen hinter dem Ohr sind ein oder mehrere Mikrofone 22 zur Aufnahme des Schalls aus der Umgebung eingebaut. Eine Signalverarbeitungseinheit 23, die ebenfalls in das Hörgerätegehäuse 21 integriert ist, verarbeitet die Mikrofonsignale und verstärkt sie. Das Ausgangssignal der Signalverarbeitungseinheit 23 wird an einen Lautsprecher bzw. Hörer 24 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Energieversorgung des Hörgeräts und insbesondere die der Signalverarbeitungseinheit 23 erfolgt durch eine ebenfalls ins Hörgerätegehäuse 21 integrierte Batterie 25.

Hörgeräte werden bislang meist noch drahtgebunden bzw. über elektrische Kontakte geladen. Dies hat zwei Nachteile. Zum einen müssen für das Laden am Hörgerät selbst zwei Kontakte angebracht werden, die nach außen zugänglich sind und somit mechanisch geschützt und/oder potenzialfrei geschaltet werden müssen. Zum anderen muss das Hörgerät für das Laden in eine spezielle Halterung gesteckt werden, damit die elektrischen Kontakte hergestellt werden können.

Es wurde aber auch bereits drahtloses Laden eines Hörgeräts vorgeschlagen. Beispielsweise gibt es von der Firma Humavox einen Prototypen eines drahtlosen Ladegeräts. Ein solches System besitzt eine Art Antenne, die ein zirkulares Feld erzeugt. Damit ist die Positionierung eines Hörgeräts mit einer linear polarisierten Antenne in einer Ebene (horizontal beziehungsweise vertikal) winkelunabhängig möglich. Sollten beide Ebenen nutzbar sein, müsste hierzu im Hörgerät selbst auch eine spezielle Antenne für die zweite Ebene verwendet werden, die wiederum einen gewissen Platz im Hörgerät benötigt.

Aus der Druckschrift DE 10 2004 012 058 B4 sind Erzeuger zeitvariabler Magnetfelder eines Magnetresonanzgeräts mit wenigstens einer Gradientenspule bekannt. Der Erzeuger besitzt ein Hochfrequenzantennenelement, das als so genannte "Birdcage-Antenne" ausgebildet ist. Dabei ist eine Birdcage-Antenne zum Erzeugen eines homogenen Hochfrequenzfelds innerhalb eines von ihr umschlossenen Volumens in der Regel derart gestaltet, dass auf einem Zylindermantel zueinander parallel und gleich beabstandete Leiter angeordnet sind, die durch Endringe miteinander verbunden sind. Dabei erfolgt eine Abstimmung in Hoch- und Tiefpassfilterbereiche, indem Kapazitäten in jedem der Leiter oder in den Endringen zwischen den Leitern eingebracht sind, sodass bei Resonanz ein homogenes Hochfrequenzfeld resultiert. Ausführungsformen solcher Birdcage-Antennen finden sich auch beispielsweise in der Druckschrift US 4 680 548.

Aus der DE 102 18 124 A1 ist eine Ladevorrichtung zur kontaktlosen Ladung batteriegetriebener Geräte bekannt. Die Ladevorrichtung umfasst ein Gehäuse, das einen über eine Öffnung zugänglichen Aufnahmeraum umgrenzt und einer darin angeordneten ersten Leiteranordnung. Die erste Leiteranordnung erzeugt ein elektromagnetisches Wechselfeld in einem Ladebereich des Aufnahmeraums, wobei eines zwischen der ersten Leiteranordnung und der Öffnung angeordnete zweite Leiteranordnung ein Abschirmfeld erzeugt, welches das über den Ladebereich hinaus wirkende Wechselfeld der ersten Leiteranordnung zumindest teilweise kompensiert.

Die DE 10 2011 076 981 A1 offenbart ein Lokalspulensystem für ein Magnetresonanzsystem mit zumindest einer Lokalspule zum Erfassen von Magnetresonanz-Signalen und einer Energieempfangsantenne, zum induktiven Empfang von Energie für das Lokalspulensystem aus einem sich zeitlich ändernden Magnetfeld.

Die Aufgabe der vorliegenden Erfindung besteht darin, ein Ladegerät bereitzustellen, mit dem das Laden eines Hörgeräts, welches eine linear polarisierte Antenne aufweist, in jeder Lage des Hörgeräts in dem Ladegerät möglich ist. Darüber hinaus soll ein entsprechendes Verfahren zum drahtlosen Laden eines Hörgeräts bereitgestellt werden.

Erfindungsgemäß wird diese Aufgabe gelöst durch ein Ladegerät zum drahtlosen Laden mindestens eines Hörgeräts mit einem zylindrischen Behälter, einer Antenne zum Erzeugen eines magnetischen Wechselfelds in dem Behälter bei elektrischer Anregung, einer Ladeschaltung, mit der die Antenne elektrisch anregbar ist, wobei die Antenne als Birdcage-Antenne, bei der Stäbe parallel zu einer Zylinderachse auf einem Zylindermantel angeordnet und die Enden der Stäbe an den Rändern des Zylindermantels jeweils mit einem Endring verbunden sind, ausgebildet und in den Behälter integriert ist, in jedem der Stäbe der Antenne jeweils ein Schaltelement angeordnet ist und mit der Ladeschaltung in der Antenne mit einer Umschaltzeit zeitlich abwechselnd ein zirkulares Magnetfeld, wobei die Schaltelemente in einem Geschlossen-Modus betrieben werden, bei welchem die Schaltelemente leitend sind, und ein lineares Magnetfeld, wobei die Schaltelemente in einem Offen-Modus betrieben werden, bei welchem die Schaltelemente sperrend sind, erzeugbar ist, und wobei insbesondere ein Ladekondensator des Hörgeräts an die Umschaltzeit angepasst ist.

Darüber hinaus ist erfindungsgemäß vorgesehen ein Verfahren zum drahtlosen Laden mindestens eines Hörgeräts durch Bereitstellen eines zylindrischen Behälters, in den eine Birdcage-Antenne, bei der Stäbe parallel zu einer Zylinderachse auf einem Zylindermantel angeordnet und die Enden der Stäbe an den Rändern des Zylindermantels jeweils mit einem Endring verbunden sind, integriert ist, wobei in jedem der Stäbe der Birdcage-Antenne jeweils ein Schaltelement angeordnet ist, Einbringen des Hörgeräts in den Behälter, mit einer Umschaltzeit zeitlich abwechselndes Erzeugen eines zirkular polarisierten Magnetfelds, wobei die Schaltelemente in einem Geschlossen-Modus betrieben werden, bei welchem die Schaltelemente leitend sind, und eines linear polarisierten Magnetfelds, wobei die Schaltelemente in einem Offen-Modus betrieben werden, bei welchem die Schaltelemente sperrend sind, in der Birdcage-Antenne und Laden des Hörgeräts in mindestens einem der beiden Felder, wobei insbesondere ein Ladekondensator des Hörgeräts an die Umschaltzeit angepasst ist.

In vorteilhafter Weise besitzt also das Ladegerät eine Birdcage-Antenne, welche so bestromt wird, dass sich zeitlich abwechselnd ein zirkular polarisiertes Feld und ein linear polarisiertes Feld in ihrem Innenraum ergibt. Damit besitzt das magnetische Feld der Birdcage-Antenne über einen vorgegebenen Zeitraum hinweg, der den Geschlossen- und Offen-Modus der Schaltelemente der Antenne umfasst, Feldkomponenten in jeder Raumrichtung. Dies bedeutet, dass eine linear polarisierte Antenne in jeder beliebigen räumlichen Position und Ausrichtung in dem Behälter beziehungsweise der Birdcage-Antenne des Ladegeräts geladen werden kann.

Vorzugsweise handelt es sich bei den Schaltelementen jeweils um PIN-Dioden. Grundsätzlich kann es sich natürlich auch um andere leistungsfeste Schaltelemente wie beispielsweise Transistoren, FETs, Relais oder MEMS handeln.

Darüber hinaus kann die Ladeschaltung zwei Anpassnetzwerke umfassen. Mit diesen Anpassnetzwerken lässt sich der Wirkungsgrad des Ladeprozesses optimieren.

Günstigerweise werden die Anpassnetzwerke synchron mit den Schaltelementen geschaltet. Damit ist es möglich, eine elektrische Anpassung in jedem Schaltmodus der Schaltelemente zu optimieren.

Vorteilhafterweise besitzt die Ladeschaltung zwei einzelne Quellen und zwei Verstärker. Hierdurch lässt sich die Bestromung der Antenne sehr flexibel handhaben.

Bei einer weiteren vorteilhaften Ausgestaltung sind die Quellen gegeneinander um 90° versetzt an den Endringen der Antenne angeschlossen. Auf diese Weise lässt sich günstig ein zirkular polarisiertes magnetisches Feld in der Birdcage-Antenne erzeugen.

In einer speziellen Ausgestaltung weisen die zwei Quellen jeweils einen DDS-Schaltkreis (Direct Digital Synthesis) auf. Damit lassen sich sehr genau geeignete Einspeisesignale synthetisieren.

Die Ladeschaltung kann ferner einen Phasenschieber aufweisen. Damit lässt sich je nach Betriebsmodus die geeignete Phase zeitgerecht einstellen.

In einer alternativen Ausgestaltungsform kann die Ladeschaltung nur eine einzige Quelle aufweisen, die über einen Wilkinson-Teiler an die Antenne angeschlossen ist. Auf diese Weise lässt sich eine Quelle einsparen und eine einfache Ansteuerung der Birdcage-Antenne ist realisierbar.

Die vorliegende Erfindung wird nun anhand der beigefügten Zeichnungen näher erläutert, in denen zeigen:
- FIG 1: den prinzipiellen Aufbau eines Hörgeräts gemäß dem Stand der Technik,
- FIG 2: eine Schaltungsskizze eines erfindungsgemäßen Ladegeräts und
- FIG 3: die Skizze eines Ladegeräts gemäß der vorliegenden Erfindung.

Die nachfolgend näher geschilderten Ausführungsbeispiele stellen bevorzugte Ausführungsformen der vorliegenden Erfindung dar.

Ein Hörgerät, wie es im Zusammenhang mit FIG 1 beispielhaft gezeigt ist, soll drahtlos geladen werden. Ein derartiges Hörgerät besitzt dazu beispielsweise eine linear polarisierte Antenne in Form einer linearen Spule. In diese Spule, die in FIG 1 nicht dargestellt ist, wird zum Laden Energie induktiv eingekoppelt. Dies kann nur dadurch geschehen, dass eine Komponente des magnetischen Wechselfelds durch die Ladespule hindurchführt.

In dem Ladegerät soll keine feste Ladeposition vorgegeben werden, um die Handhabung zu vereinfachen. Daher kann nicht sichergestellt werden, in welche Richtung eine linear polarisierte Empfangsantenne eines zu ladenden Hörgeräts weist. Daher ist erfindungsgemäß vorgesehen, dass das Magnetfeld in einem Ladebereich eines Ladegeräts zeitlich wechselnde Raumrichtungskomponenten aufweist. Insbesondere sollen die beiden Raumrichtungen einer Ebene durch ein zirkular polarisiertes und die weitere dazu orthogonale Raumrichtung durch ein zusätzliches lineares Feld erzeugt werden. Dazu muss also eine zirkular polarisierbare und eine linear polarisierbare Antenne verwendet werden.

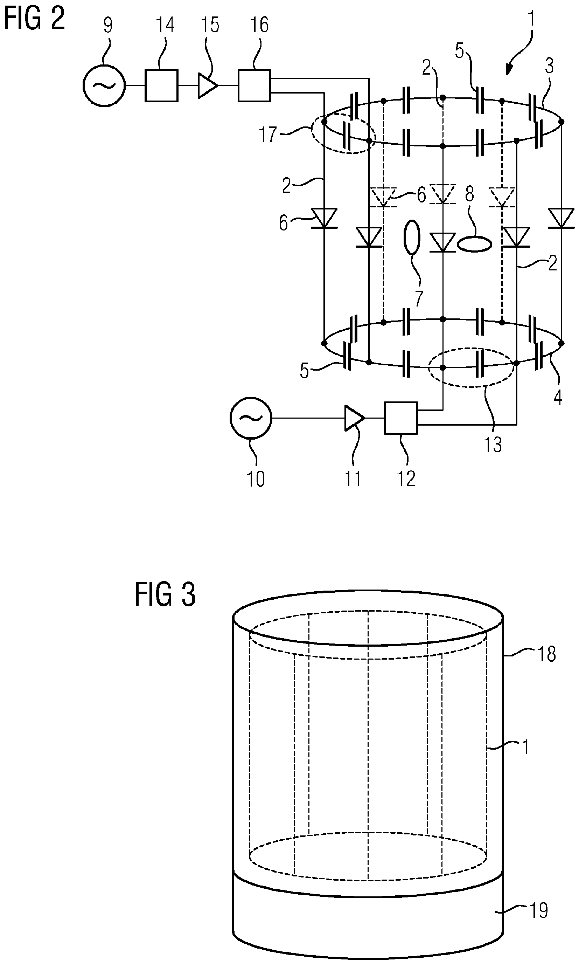

Um beide Magnetfeldtypen (linear polarisiertes und zirkular polarisiertes Feld) bereitstellen zu können, ist eine so genannte "Birdcage-Antenne" vorgesehen, die beispielhaft die in FIG 2 dargestellte Beschaltung aufweist. Die Birdcage-Antenne 1 weist üblicherweise, wie eingangs beschrieben, auf einem Zylindermantel zueinander parallel und gleich beabstandete stabförmige Leiter 2 auf, die durch Endringe 3, 4 miteinander verbunden sind. Beispielsweise können in den Endringen 3 und 4 Kapazitäten 5 zwischen jeweils zwei benachbarten geraden Leitern 2 vorgesehen sein.

In den Stäben beziehungsweise Leitern 2 der Birdcage-Antenne werden PIN-Dioden 6 eingesetzt. Alternativ können auch andere Schaltelemente, insbesondere elektronische Schalter wie Transistoren verwendet werden. Dadurch ist es möglich, diese Antenne einmal als zirkulare Birdcage-Antenne zu verwenden, wenn die Schaltelemente beziehungsweise PIN-Dioden 6 geschaltet (leitend) sind (Geschlossen-Modus), und einmal als gegenüberliegendes Spulenpaar aus den Endringen 3 und 4, wenn die Schaltelemente beziehungsweise PIN-Dioden sperren (Offen-Modus).

Vorzugsweise genügen die beiden Endringe 3 und 4 der Helmholtz-Bedingung, wonach sie im Abstand ihres Radius auf gleicher Achse voneinander entfernt angeordnet sind und gleichsinnig von Strom durchflossen werden. Damit ergibt sich zwischen den beiden Endringen 3 und 4 ein homogenes Magnetfeld.

Zwischen beiden Antennentypen, nämlich linear polarisierter Sendeantenne (Endringe 3 und 4) und zirkular polarisierter Sendeantenne (Stäbe 2) wird dann abwechselnd hin- und hergeschaltet. Hierzu ist zu beachten, dass der Ladekondensator nach dem Gleichrichter im Hörgerät entsprechend der Umschaltzeit ausreichend groß gewählt wird.

Da somit im Inneren der Birdcage-Antenne 1 einmal ein lineares und zum anderen ein zirkulares Magnetfeld vorherrscht, liegen zeitlich verteilt im gesamten Inneren der Birdcage-Antenne Magnetfeldkomponenten in alle drei Raumrichtungen vor. Dies wiederum bedeutet, dass sowohl eine vertikal ausgerichtete Empfangsantenne 7 als auch eine horizontal ausgerichtete Empfangsantenne 8 in dem wechselnden Magnetfeld Energie aufnehmen kann. In FIG 2 sind diese Empfangsantennen 7, 8 symbolisch ohne Hörgerät dargestellt.

Zur Ansteuerung der Birdcage-Antenne 1 werden hier zwei einzelne Quellen 9, 10 verwendet. Von der einen Quelle 10 wird über einen Verstärker 11 und ein Anpassnetzwerk 12 ein Signal in ein erstes Einspeistor 13 eingespeist, welches Teil des unteren Endrings 4 ist. Es handelt sich um ein Zweitor, das durch die Anschlüsse eines der Kondensatoren 5 gebildet ist.

Die zweite Quelle 9 speist über einen Phasenschieber 14, einen Verstärker 15 und ein Anpassnetzwerk 16 ein Signal in ein zweites Einspeistor 17 ein, welches Teil des oberen Endrings 3 ist. Es handelt sich hier ebenfalls um ein Zweitor, das durch die Anschlüsse eines Kondensators 5 des Endrings 3 gebildet ist.

Die Quellen 9 und 10 werden in einem 90°-Winkel zueinander an den Endringen 3, 4 der Birdcage-Antenne angeschlossen. Dies bedeutet, dass die beiden Einspeistore 13 und 17 zueinander einen Winkel von 90° bezogen auf die Rotationsachse der Birdcage-Antenne aufweisen.

Durch die PIN-Dioden 6 oder anderen Schaltelemente kann die Birdcage-Antenne in einen so genannten "Birdcage-Modus" (Geschlossen-Modus), in dem die Stäbe das maßgebliche Magnetfeld liefern, und in einen so genannten "Helmholtz-Modus" (Offen-Modus) geschaltet werden. Zum Laden wird ständig zwischen beiden Modi hin- und hergeschaltet. Deswegen wird der Phasenschieber 14 im Birdcage-Modus auf 90° und im Helmholtz-Modus auf 0° geschaltet. Darüber hinaus kann die Amplitude beider Signale aus den Quellen 9, 10 je nach Lastfall gewichtet werden.

Gemäß einer alternativen Ausführungsform wird nur eine Stromquelle für das Laden benutzt. Diese kann über einen so genannten Wilkinson-Teiler auf beide Anschlusspunkte, d. h. die Einspeistore 13 und 17, aufgespalten werden. Ferner ist es möglich, für beide Quellen 9, 10 DDS-Schaltbausteine (Direct Digital Synthesis) einzusetzen. In diesem Fall könnte man auf den einstellbaren Phasenschieber 14 verzichten, weil entsprechende Phasenverschiebungen bereits in der Ansteuerung der DDS-Schaltkreise berücksichtigt werden können.

FIG 3 zeigt den prinzipiellen Aufbau eines erfindungsgemäßen Ladegeräts. Das Ladegerät besitzt einen Behälter 18, der zylinderförmig ist. In die Wand des Behälters 18 ist die Birdcage-Antenne 1 integriert. Im Beispiel von FIG 3 befindet sich eine Ladeschaltung 19 am Boden des Behälters 18. Die Ladeschaltung 19 beinhaltet die obigen Komponenten 9 bis 12 und 14 bis 16. Die Ladeschaltung 19 kann natürlich beliebig an dem Behälter 18 angeordnet sein. In jedem Fall kann ein zu ladendes Hörgerät oder auch mehrere in den Behälter 18 in beliebiger Orientierung und Position eingebracht werden und es ist stets ein effektives Laden möglich. Das Laden von einem oder mehreren Hörgeräten ist also von deren Position und Ausrichtung innerhalb des Ladesystems unabhängig. Damit ist eine hohe Bedienfreundlichkeit des Ladesystems gegeben.

## Patentansprüche

1. Ladegerät zum drahtlosen Laden mindestens eines Hörgeräts (21 bis 25) mit
- einem zylindrischen Behälter (18),
- einer Antenne (1) zum Erzeugen eines magnetischen Wechselfelds in dem Behälter (18) bei elektrischer Anregung,
- einer Ladeschaltung (19), mit der die Antenne (1) elektrisch anregbar ist,
**dadurch gekennzeichnet, dass**
- die Antenne (1) als Birdcage-Antenne, bei der Stäbe (2) parallel zu einer Zylinderachse auf einem Zylindermantel angeordnet und die Enden der Stäbe (2) an den Rändern des Zylindermantels jeweils mit einem Endring (3, 4) verbunden sind, ausgebildet und in den Behälter (18) integriert ist,
- in jedem der Stäbe (2) der Antenne (1) jeweils ein Schaltelement (6) angeordnet ist und
- mit der Ladeschaltung (19) in der Antenne (1) mit einer Umschaltzeit zeitlich abwechselnd ein zirkulares Magnetfeld, wobei die Schaltelemente (6) in einem Geschlossen-Modus betrieben werden, bei welchem die Schaltelemente (6) leitend sind, und ein lineares Magnetfeld, wobei die Schaltelemente (6) in einem Offen-Modus betrieben werden, bei welchem die Schaltelemente (6) sperrend sind, erzeugbar ist, und wobei insbesondere ein Ladekondensator des Hörgeräts (21 bis 25) an die Umschaltzeit angepasst ist.

2. Ladegerät nach Anspruch 1, wobei jedes Schaltelement (6) eine PIN-Diode ist.

3. Ladegerät nach Anspruch 1 oder 2, wobei die Ladeschaltung (19) zwei Anpassnetzwerke (12, 16) umfasst.

4. Ladegerät nach Anspruch 3, wobei die Anpassnetzwerke (12, 16) synchron mit den Schaltelementen (6) geschaltet werden.

5. Ladegerät nach einem der Ansprüche 1 bis 4, wobei die Ladeschaltung (19) zwei einzelne Quellen (9, 10) und zwei Verstärker (11, 15) umfasst.

6. Ladegerät nach Anspruch 5, wobei die Quellen (9, 10) gegeneinander um 90° versetzt an den Endringen (3, 4) der Antenne (1) angeschlossen sind.

7. Ladegerät nach einem der Ansprüche 5 bis 6, wobei die zwei Quellen (9, 10) jeweils einen DDS-Schaltkreis aufweisen.

8. Ladegerät nach einem der Ansprüche 1 bis 7, wobei die Ladeschaltung (19) einen Phasenschieber (14) aufweist.

9. Ladegerät nach Anspruch 1 oder 2, wobei die Ladeschaltung (19) nur eine einzige Quelle aufweist, die über einen Wilkinson-Teiler an die Antenne (1) angeschlossen ist.

10. Verfahren zum drahtlosen Laden mindestens eines Hörgeräts (21 bis 25) durch
- Bereitstellen eines zylindrischen Behälters (18), in den eine Birdcage-Antenne (1), bei der Stäbe (2) parallel zu einer Zylinderachse auf einem Zylindermantel angeordnet und die Enden der Stäbe (2) an den Rändern des Zylindermantels jeweils mit einem Endring (3, 4) verbunden sind, integriert ist, wobei in jedem der Stäbe (2) der Birdcage-Antenne (1) jeweils ein Schaltelement (6) angeordnet ist,
- Einbringen des Hörgeräts (21 bis 25) in den Behälter (18),
- mit einer Umschaltzeit zeitlich abwechselndes Erzeugen eines zirkular polarisierten Magnetfelds, wobei die Schaltelemente (6) in einem Geschlossen-Modus betrieben werden, bei welchem die Schaltelemente (6) leitend sind, und eines linear polarisierten Magnetfelds, wobei die Schaltelemente (6) in einem Offen-Modus betrieben werden, bei welchem die Schaltelemente (6) sperrend sind, in der Birdcage-Antenne (1), wobei insbesondere ein Ladekondensator des Hörgeräts (21 bis 25) an die Umschaltzeit angepasst ist, und
- Laden des Hörgeräts (21 bis 25) in mindestens einem der beiden Felder.

## Claims

1. Charging device for wirelessly charging at least one hearing aid (21 to 25), having
- a cylindrical container (18),
- an antenna (1) for generating an alternating magnetic field in the container (18) in the event of electrical excitation,
- a charging circuit (19) which can be used to electrically excite the antenna (1),
**characterized in that**
- the antenna (1) is in the form of a birdcage antenna, in which rods (2) are arranged parallel to a cylinder axis on a cylinder jacket and the ends of the rods (2) at the edges of the cylinder jacket are each connected to an end ring (3, 4), and is integrated in the container (18),
- a switching element (6) is respectively arranged in each of the rods (2) of the antenna (1), and
- the charging circuit (19) can be used to temporally alternately generate, using a switching time, in the antenna (1), a circular magnetic field, in which case the switching elements (6) are operated in a closed mode, in which the switching elements (6) are on, and a linear magnetic field, in which case the switching elements (6) are operated in an open mode, in which the switching elements (6) are off and wherein in particular a charging capacitor of the hearing aid (21 to 25) is matched to the switching time.

2. Charging device according to Claim 1, wherein each switching element (6) is a PIN diode.

3. Charging device according to Claims 1 or 2, wherein the charging circuit (19) comprises two matching networks (12, 16).

4. Charging device according to Claim 3, wherein the matching networks (12, 16) are switched in synchronism with the switching elements (6).

5. Charging device according to one of Claims 1 to 4, wherein the charging circuit (19) comprises two individual sources (9, 10) and two amplifiers (11, 15).

6. Charging device according to Claim 5, wherein the sources (9, 10) are connected to the end rings (3, 4) of the antenna (1) in a manner offset through 90° with respect to one another.

7. Charging device according to either of Claims 5 and 6, wherein the two sources (9, 10) each have a DDS circuit.

8. Charging device according to one of Claims 1 to 7, wherein the charging circuit (19) has a phase shifter (14) .

9. Charging device according to Claim 1 or 2, wherein the charging circuit (19) has only a single source which is connected to the antenna (1) via a Wilkinson splitter.

10. Method for wirelessly charging at least one hearing aid (21 to 25) by
- providing a cylindrical container (18) in which a birdcage antenna (1), in which rods (2) are arranged parallel to a cylinder axis on a cylinder jacket and the ends of the rods (2) at the edges of the cylinder jacket are each connected to an end ring (3, 4), is integrated, wherein a switching element (6) is respectively arranged in each of the rods (2) of the birdcage antenna (1),
- introducing the hearing aid (21 to 25) into the container (18),
- temporally alternately generating, using a switching time, a circularly polarized magnetic field, in which case the switching elements (6) are operated in a closed mode, in which the switching elements (6) are on, and a linearly polarized magnetic field, in which case the switching elements (6) are operated in an open mode, in which the switching elements (6) are off, in the birdcage antenna (1), wherein in a particular charging capacitor of the hearing aid (21 to 25) is matched to the switching time, and
- charging the hearing aid (21 to 25) in at least one of the two fields.

## Revendications

1. Chargeur destiné à la charge sans fil d'au moins un appareil auditif (21 à 25), comprenant
- un contenant cylindrique (18),
- une antenne (1) destinée à générer un champ magnétique alternatif dans le contenant (18) lors d'une excitation électrique,
- un circuit de charge (19) avec lequel l'antenne (1) peut être excitée électriquement,
**caractérisé en ce que**
- l'antenne (1) est réalisée sous la forme d'une antenne en cage à oiseaux, avec laquelle des barres (2) sont disposées parallèlement à un axe de cylindre sur une enveloppe cylindrique et les extrémités des barres (2) sont respectivement reliées à un anneau d'extrémité (3, 4) au niveau des bords de l'enveloppe cylindrique, et laquelle est intégrée dans le contenant (18),
- un élément de commutation (6) est respectivement disposé dans chacune des barres (2) de l'antenne (1) et
- le circuit de charge (19) permet de générer dans l'antenne (1), en alternance dans le temps avec un temps de permutation, un champ magnétique circulaire, les éléments de commutation (6) fonctionnant dans un mode fermé avec lequel les éléments de commutation (6) sont passants, et un champ magnétique linéaire, les éléments de commutation (6) fonctionnant dans un mode ouvert avec lequel les éléments de commutation (6) sont bloqués, et un condensateur de charge de l'appareil auditif (21 à 25) étant notamment adapté au temps de permutation.

2. Chargeur selon la revendication 1, chaque élément de commutation (6) étant une diode PIN.

3. Chargeur selon la revendication 1 ou 2, le circuit de charge (19) comportant deux réseaux d'adaptation (12, 16).

4. Chargeur selon la revendication 3, les réseaux d'adaptation (12, 16) étant commutés de manière synchrone avec les éléments de commutation (6).

5. Chargeur selon l'une des revendications 1 à 4, le circuit de charge (19) comportant deux sources (9, 10) individuelles et deux amplificateurs (11, 15).

6. Chargeur selon la revendication 5, les sources (9, 10) étant décalées de 90° l'une de l'autre et étant raccordées aux anneaux d'extrémité (3, 4) de l'antenne (1) .

7. Chargeur selon l'une des revendications 5 à 6, les deux sources (9, 10) possédant respectivement un circuit DDS.

8. Chargeur selon l'une des revendications 1 à 7, le circuit de charge (19) possédant un déphaseur (14).

9. Chargeur selon la revendication 1 ou 2, le circuit de charge (19) ne possédant qu'une seule source qui est raccordée à l'antenne (1) par le biais d'un diviseur de Wilkinson.

10. Procédé de charge sans fil d'au moins un appareil auditif (21 à 25) par
- fourniture d'un contenant cylindrique (18) dans lequel est intégrée une antenne en cage à oiseaux (1), avec laquelle des barres (2) sont disposées parallèlement à un axe de cylindre sur une enveloppe cylindrique et les extrémités des barres (2) sont respectivement reliées à un anneau d'extrémité (3, 4) au niveau des bords de l'enveloppe cylindrique, un élément de commutation (6) étant respectivement disposé dans chacune des barres (2) de l'antenne en cage à oiseaux (1),
- introduction de l'appareil auditif (21 à 25) dans le contenant (18),
- génération dans l'antenne en cage à oiseaux (1), en alternance dans le temps avec un temps de permutation, d'un champ magnétique à polarisation circulaire, les éléments de commutation (6) fonctionnant dans un mode fermé avec lequel les éléments de commutation (6) sont passants, et d'un champ magnétique à polarisation linéaire, les éléments de commutation (6) fonctionnant dans un mode ouvert avec lequel les éléments de commutation (6) sont bloqués, un condensateur de charge de l'appareil auditif (21 à 25) étant notamment adapté au temps de permutation, et
- charge de l'appareil auditif (21 à 25) dans au moins l'un des deux champs.
